(19) Europäisches Patentamt

European Patent Office

Office européen des brevets

(11) EP 1 489 782 A1

(12) EUROPEAN PATENT APPLICATION

(43) Date of publication:
22.12.2004 Bulletin 2004/52

(51) Int Cl.⁷: H04L 12/46

(21) Application number: 04014251.5

(22) Date of filing: 17.06.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 18.06.2003 JP 2003172713

(71) Applicant: NEC CORPORATION
Tokyo (JP)

(72) Inventor: Hayashi, Takeo
Minato-ku, Tokyo (JP)

(74) Representative: Betten & Resch
Patentanwälte,
Theatinerstrasse 8
80333 München (DE)

(54) **Data transfer device,method and system using fragmentation and reassembly**

(57)     A data transfer device, a data transfer method, a data communication system and a program for reducing data transfer delays in intermediate network devices in a wide area Ethernet network. A MAC (Media Access Control) frame having a length of longer than or equal to N bytes is divided into divided frames each having a length of M bytes (N > M) in edge devices which form a wide area Ethernet network. Thus, a maximum limit is provided on the length of MAC frames which are transmitted in the network. Consequently, it is possible to eliminate delays in the transmission of other MAC frames in the network. In the case of transmitting divided MAC frames from inside to outside the network, the divided MAC frames are reassembled into an original MAC frame.

FIG. 5

**Description**

FIELD OF THE INVENTION

The present invention relates to a data transfer device, a data transfer method, a data communication system and a program, and more particularly, to a data transfer system for reducing data transfer delays in intermediate network devices such as repeaters in a wide area network made up from Ethernet ®.

**BACKGROUND OF THE INVENTION**

Ethernet ® covered by the IEEE 802.3 standard is commonly known as the conventional LAN (local-area network) technology. There have been proposed several versions of Ethernet: one called 10Base-T supports a transmission rate of 10 Mbps; and another called 100Base-TX supports a transmission rate of 100 Mbps. The Ethernet has provided a transmission distance of up to 100 m or so, depending on the transfer medium. Besides, Gigabit Ethernet ® has been developed recently as for example disclosed in Japanese Patent Application laid open No. 2003-500899. The Gigabit Ethernet ® enables long-distance transmission by using the light or optical fiber as the transfer medium.

Not only does the Gigabit Ethernet ® enable long-distance transmission, it is also under development so as to be acceptable to both LANs and WANs. Thus, the application of the Ethernet technology is being broadened from LANs to WANs. Further, standards for 100 Gbps Ethernet have been considered, and the transmission rate will likely be improved.

According to SDH (Synchronous Digital Hierarchy) defined by ITU-TG. 707 standard, it is possible to accommodate Gigabit Ethernet ® efficiently and transmit data transparently with the use of VC (Virtual Concatenation) technology, by which a plurality of containers are treated as a band, and GFP (Generic Framing Procedure) of T1X1. GFP is an encapsulation method for storing data of various types of protocols in a payload of SONET (Synchronous Optical Network)/ SDH (Synchronous Digital Hierarchy).

From the point of view of a communication carrier, it is possible to suppress investment in a backbone network by the introduction of low-cost Ethernet devices.

Against this background, wide area Ethernet service assumes greater prominence. However, conventional Ethernet networks have some problems as follows.

The first problem is an increase of delay in a network. This is because an intermediate network device in a network stores frames before transmitting them, and requires a considerable amount of time for the transmission of the frames in long length. In addition, when frames of long frame length and those of short frame length are transmitted from the same output port of the intermediate network device, other frames cannot be transmitted while the frames of long frame length are being output.

The second problem is the impossibility of transmission of jumbo frames. This is because specifications for jumbo frames having a length of 8Kbytes or more are unique, and, if an intermediate network device in a network does not support such jumbo frames, the jumbo frames may be lost or discarded.

SUMMARY OF THE INVENTION

It is therefore an object of the present invention to provide a data transfer device, a data transfer method, a data communication system using the same, and a program for reducing data transfer delays in intermediary processing in a network even when there are frames in long length.

In accordance with an aspect of the present invention, to achieve the above objects, there is provided a data transfer device which is placed between the outside and inside of an Ethernet network, comprising: a dividing section for receiving a data frame to be transferred to the inside of the Ethernet network, and dividing the frame into a plurality of divided frames each having a predetermined fixed-length when the data length of the frame is longer than or equal to a prescribed length; and a reassembling section for receiving data frames to be transferred to the outside of the Ethernet network, and reassembling the frames into an original data frame when the frames are the divided frames.

In accordance with another aspect of the present invention, there is provided a data communication system including the data transfer device.

In accordance with yet another aspect of the present invention, there is provided a data transfer method for the data transfer device which is placed between the outside and inside of an Ethernet network, comprising: a dividing step for receiving a data frame to be transferred to the inside of the Ethernet network, and dividing the frame into a plurality of divided frames each having a predetermined fixed-length when the data length of the frame is longer than or equal to a prescribed length; and a reassembling step for receiving data frames to be transferred to the outside of the Ethernet network, and reassembling the frames into an original data frame when the frames are the divided frames.

In accordance with yet another aspect of the present invention, there is provided a program for implementing the data transfer method for the data transfer device placed between the outside and inside of an Ethernet network, which makes a computer perform: a dividing process for receiving a data frame to be transferred to the inside of the Ethernet network, and dividing the frame into a plurality of divided frames each having a predetermined fixed-length when the data length of the frame is longer than or equal to a prescribed length; and a reassembling process for receiving data frames to be transferred to the outside of the Ethernet network, and reassembling the frames into an original data frame when the frames are the divided frames.

In accordance with the present invention, a MAC (Media Access Control) frame having a length of longer than or equal to N bytes is divided to generate divided frames each having a length of M bytes (N > M) in edge devices or network nodes which form a wide area Ethernet network. Thus, there is provided a maximum limit on the length of MAC frames which are transmitted in the network. Consequently, it is possible to eliminate delays in the transmission of other MAC frames in the network. In the case of transmitting divided MAC frames to the outside of the network, the divided MAC frames are reassembled into an original MAC frame.

BRIEF DESCRIPTION OF THE DRAWINGS

The objects and features of the present invention will become more apparent from the consideration of the following detailed description taken in conjunction with the accompanying drawings in which:

Fig. 1 is a schematic diagram showing the construction of a network where an embodiment of the present invention is applied;

Fig. 2 is a block diagram showing the functions of an edge device depicted in Fig. 1;

Fig. 3 is a block diagram showing a concrete example of the construction of a dividing/ reassembling section depicted in Fig. 2;

Fig. 4 is a diagram showing an example of a reassemble management table depicted in Fig. 3;

Fig. 5 is a flowchart showing the operation of the dividing/reassembling section according to the embodiment of the present invention;

Fig. 6 is a diagram showing the relation between a MAC frame and divided frames; and

Fig. 7 is a diagram illustrating a method for forming the divided frames.

DESCRIPTION OF THE PREFERRED EMBODIMENT

Referring now to the drawings, a description of preferred embodiment of the present invention will be given in detail.

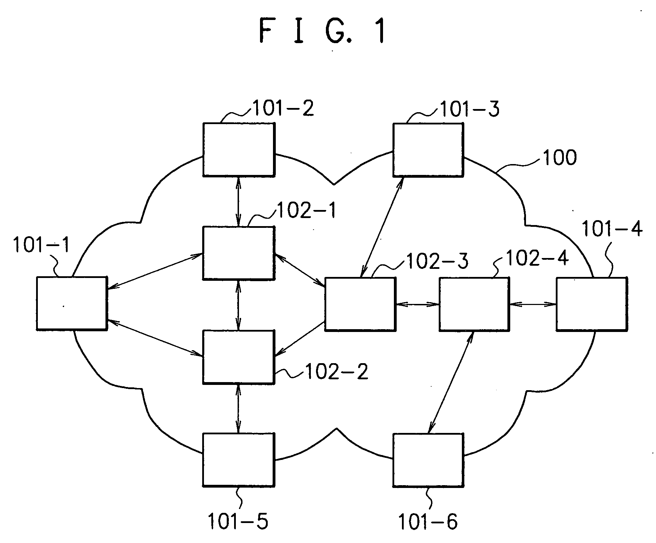

Fig. 1 is a schematic diagram showing the construction of a network where an embodiment of the present invention is applied. As can be seen in Fig. 1, a wide area Ethernet network 100 comprises a plurality of edge devices 101-1 to 101-6 located on the boundary of the Ethernet network 100, and a plurality of intermediate devices 102-1 to 102-4 located within the Ethernet network 100. The intermediate devices 102-1 to 102-4 receive and forward MAC (Media Access Control) frames across the Ethernet network 100. The intermediate devices 102-1 to 102-4 may be devices for switching or transferring normal Ethernet frames, such as repeaters, network switches and routers.

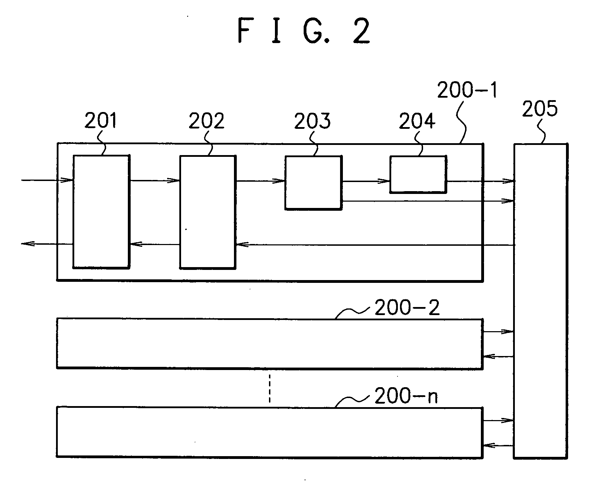

Fig. 2 is a block diagram showing the construction of the respective edge devices 101-1 to 101-6 in the wide area Ethernet network 100. The edge device (101-1 to 101-6) comprises interface sections 200-1 to 200-n each having an input/ output port, and a switch section 205 capable of connecting arbitrary two ports of n I/O (input/ output) ports.

The interface section (200-1 to 200-n) includes a physical layer processing section 201, a MAC layer processing section 202, a destination determining section 203, and a dividing/ reassembling section 204. The physical layer processing section 201 is either the source or the destination of signals to/ from a physical medium of, for example, light, electricity and the like. The MAC layer processing section 202 is either the source or the destination of MAC frames. The destination determining section 203 selects an output port with respect to each MAC frame received from the MAC layer processing section 202. The dividing/ reassembling section 204 reassembles divided frames when they are input through the interface section (200-1 to 200-n) which is linked to the wide area Ethernet network 100 to output them to the outside of the Ethernet network 100. On the other hand, the dividing/reassembling section 204 divides a frame consisting of N or more bytes when it is input through the interface section (200-1 to 200-n) which is not linked to the wide area Ethernet network 100. On this occasion, the dividing/ reassembling section 204 produces a various types of header information necessary for reassembling so that divided frames can be restored to original form.

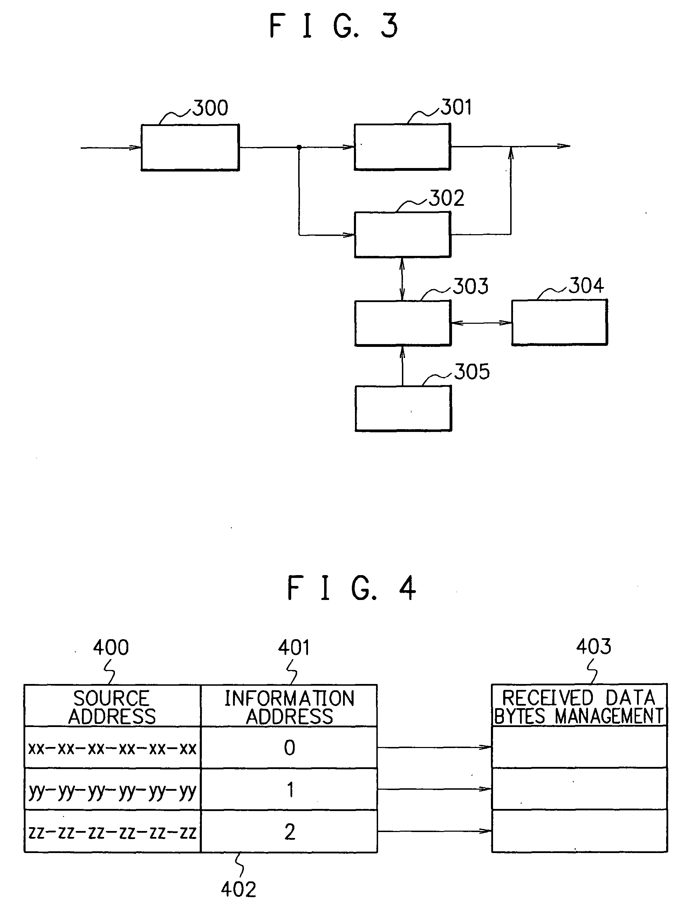

Fig. 3 is a block diagram showing a concrete example of the construction of the dividing/ reassembling section 204. The dividing/reassembling section 204 includes a frame length determining section 300, a dividing section 301, a reassembling section 302, a reassemble management section 303, a reassemble management table 304, and a timer 305. The frame length determining section 300 checks and detects the length/ type of a received frame. The dividing section 301 divides a MAC frame, which is to enter the wide area Ethernet network 100, into frames having a fixed length (M bytes: N > M) if the frame length determining section 300 has determined that the MAC frame is N bytes long or more. The reassembling section 302 reassembles MAC frames, which come form a port linked to the wide area Ethernet network 100, if the frame length determining section 300 has determined that the MAC frames are divided frames. The reassemble management section 303 manages frames to be reassembled. The reassemble management table 304 keeps information for reassembling.

Fig. 4 is a diagram showing an example of the reassemble management table 304, which will be more fully described later.

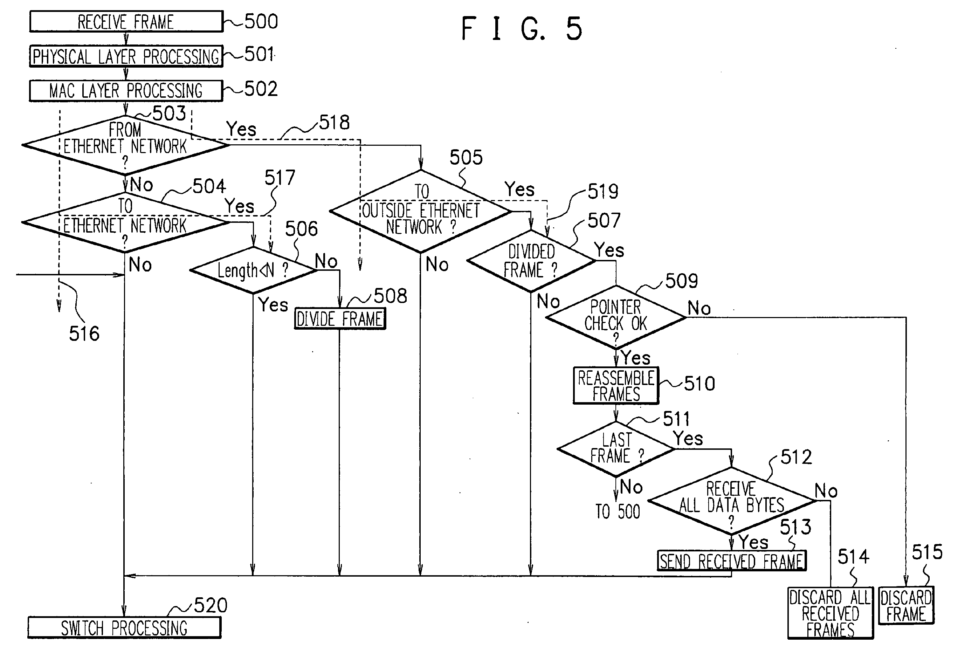

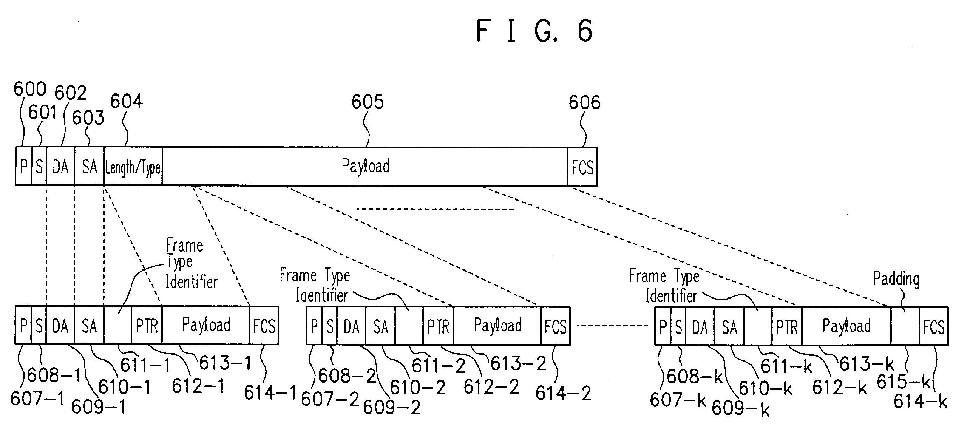

Fig. 5 is a flowchart showing the operation of the dividing/reassembling section 204. Fig. 6 is a diagram showing a format of divided frames in the wide area Ethernet network 100.

Referring to Figs. 5 and 6, a description will be given of the process for dividing a frame. A MAC frame, which is to enter the wide area Ethernet network 100, is composed of a preamble 600, a start- of- frame delimiter (SFD) 601, a destination MAC address (DA) 602, a source MAC address (SA) 603, a "length/ type" 604, a payload 605, and a frame check sequence (FCS) 606. The preamble 600 and SFD 601 in a fixed pattern are appended to the head of each frame. The "length/type" field 604 indicates either the frame length or the frame type. The payload field 605 contains the data from the upper layer. The FCS field 606 contains a check value to check for errors or damaged frames.

When the length of a frame indicated by the "length/ type" field 604 is N bytes or more, the frame is divided into frames of a fixed size to be transferred in the wide area Ethernet network 100. Each of the divided frames is composed of a preamble 607 (607-1 to 607-k), a start- of- frame delimiter (SFD) 608 (608-1 to 608-k), a destination MAC address (DA) 609 (609-1 to 609-k), a source MAC address (SA) 610 (610-1 to 610-k), a frame type identifier 611 (611-1 to 611-k), a pointer (PTR) 612 (612-1 to 612-k), a payload 613 (613-1 to 613-k), and a frame check sequence (FCS) 614 (614-1 to 614-k). The preamble 607 and SFD 608 in a fixed pattern are appended to the head of each frame. The frame type identifier 611 indicates that the frame is a divided frame. The PTR 612 indicates the position of divided data in the original frame. The payload field 613 contains divided data. The FCS field 614 contains a check value to check for errors or damaged frames.

Incidentally, if the length of the last frame is less than the minimum frame length, the last frame may include a padding or a filler 615 (a field filled with zeros) to extend the frame length to the minimum frame length.

In the following, a description will be made of the case where a MAC frame is forwarded from the edge device 101-1 to the edge device 101-4 via the intermediate devices 102-1, 102-3 and 102-4 in the wide area Ethernet network 100 shown in Fig. 1.

When the edge device 101-1 has received a MAC frame from the outside of the wide area Ethernet network 100, the frame is divided into some frames if it has a length of N bytes or more before being forwarded. Incidentally, in the edge device 101-1, the interface section 200-1 has a port connected to the outside of the wide area Ethernet network 100, while the interface section 200-2 has a port connected to the inside thereof. Accordingly, the data transmitted from the outside of the wide area Ethernet network 100 is received by the physical layer processing section 201 of the interface section 200-1.

After receiving a signal from a physical medium of light/electricity (Fig. 5, step 500), the physical layer processing section 201 carries out such processes as the conversion of signal format, encoding of received data (8B/ 10B, 4B/ 5B) and the like (step 501). In addition, the physical layer processing section 201 is provided with an auto-negotiation function for automatically deciding the optimal communication mode with respect to a correspondent device.

Subsequently, the MAC layer processing section 202 performs the process for deciding how to access the physical medium (CSMA/ CD: Carrier Sense Multiple Access with Collision Detection) for sending the received data (step 502).

Then, it is determined whether the dividing process or the reassembling process is to be performed in the edge device 101-1. In the case of transmitting a frame received from the outside of the wide area Ethernet network 100 to the inside (indicated by allow 517 in Fig. 5), that is, when the interface section which has input the frame therein is linked to the outside of the wide area Ethernet network 100 (step 503, No) and the destination determining section 203 selects the interface section which is linked to the Ethernet network 100 to output the frame (step 504, Yes), the dividing/ reassembling section 204 divides the frame (step 508) if the length of the frame is equal to or more than N bytes (step 506, No).

In the case of transmitting a frame received from the wide area Ethernet network 100 to the outside thereof (indicated by allow 519 in Fig. 5), that is, when the interface section which has input the frame therein is linked to the wide area Ethernet network 100 (step 503, Yes) and the destination determining section 203 selects the interface section which is linked to the outside of the Ethernet network 100 to output the frame (step 505, Yes), the dividing/ reassembling section 204 reassembles an original frame if the frame is a divided frame (step 507, Yes).

In the case of transmission outside the wide area Ethernet network 100 (step 504, No) or transmission within the Ethernet network 100 (step 505, No) indicated by allows 516 and 518 in Fig. 5, respectively, the frame is directly sent to the switch section 205 without undergoing the dividing/ reassembling process in the dividing/ reassembling section 204.

In this instance, the MAC frame is transmitted from the outside of the wide area Ethernet network 100 to the inside. Consequently, after the MAC layer processing section 202 has processed the MAC frame, the destination determining section 203 selects the interface section 200-2 as a port for outputting the frame according to the destination MAC address 602 of the frame. Thereafter, the dividing/ reassembling section 204 divides the MAC frame if the length of the frame is equal to or more than N bytes.

The switch section 205 sends the divided MAC frames to the interface section 200-2. After the physical layer processing section 201 and the MAC layer processing section 202 have processed the divided MAC frames, the frames are transferred to the intermediate device 102-1 in the wide area Ethernet network 100. The divided MAC frames are forwarded to the edge device 101-4 via the intermediate devices 102-1, 102-3 and 102-4 in the wide area Ethernet network 100.

Incidentally, the intermediate devices 102-1, 102-3 and 102-4 are ordinal Ethernet switches, and forward MAC frames according to the destination MAC address 609 of the respective frames. Besides, transmission between the intermediate devices 102-1 and 102-3 is not necessarily made through Ethernet ®, and, for example, it is possible to utilize a device that has a mechanism for transparently transmitting MAC frames. As an example, there is a device that encapsulates each GFP frame and transmits the frame through SONET/ SDH. Transmission between the intermediate devices 102-1 and 102-3 may be made using SONET/ SDH.

When the edge device 101-4 has received the MAC frames from the wide area Ethernet network 100, the frames are reassembled into an original frame in the interface section before being forwarded to the outside of the Ethernet network 100. In the edge device 101-4 of this example, the interface section 200-1 is connected to the wide area Ethernet network 100, while the interface section 200-2 is connected to the outside thereof.

After receiving the frames (Fig. 5, step 500), the physical layer processing section 201 and the MAC layer processing section 202 perform the same processes as described previously for the operation of the edge device 101-1 (steps 501 and 502).

Subsequently, the destination determining section 203 selects the interface section 200-2 which is linked to the outside of wide area Ethernet network 100 to output the frames, and the dividing/reassembling section 204 reassembles the frames into an original frame. Having been reassembled, the original MAC frame is sent to the interface section 200-2 by the switch section 205 to be transmitted to the outside of the wide area Ethernet network 100.

Next, a description will be made in detail of the operation of the dividing/ reassembling section 204. In the following description, binary notation is used to represent numbers unless otherwise specified, and "h" is added to the end of each number in hexadecimal form. Incidentally, a byte includes 8 bits.

First, the dividing process will be described. The dividing process is performed when a MAC frame has a length of N bytes or more. The frame length determining section 300 detects the length of a received MAC frame to determine whether or not to conduct the dividing process at the following stage. The length/ type field 602 of the MAC frame designates its frame length. Alternatively, the frame length can be obtained by counting received data bytes while receiving the MAC frame.

According to the IEEE 802.2 standard, if the length/ type field value is less than or equal to 1500, the length of a received MAC frame is equal to the length/ type field value. In addition, if the length/ type field value is greater than 1536 (0600h in hexadecimal form), the length/type field value identifies the particular type of upper protocol or frame being sent or received. Besides, according to Ethernet Version 2 released as the DIX (DEC- Intel- Xerox) standard, a field corresponding to the length/ type field designates the type of upper layer protocol. For example, a value greater than or equal to 0600h, such as 0800h, indicates IP (Internet Protocol).

When the frame length determining section 300 has determined that the length of a received MAC frame is N bytes or more, data in the payload field 605 of the MAC frame is divided into segments each having a fixed length of M bytes. The destination MAC address 602 and source MAC address 603 of the MAC frame before division are added to each of the divided payload data. Additionally, an unengaged value greater than or equal to 0600h indicating a type is added to the length/ type field of each divided MAC frame as the frame type identifier 611 so that the frame can be recognized as a divided frame. For example, 9000h is added as the frame type identifier 611. Further, the divided frames are provided with pointer information or the pointer 612 indicating the position of the divided payload data in the original MAC frame.

As can be seen in Fig. 6, a MAC frame is composed of the preamble 600, the start- of- frame delimiter (SFD) 601, the destination MAC address (DA) 602, the source MAC address (SA) 603, the "length/type" 604, the payload 605, and the frame check sequence (FCS) 606.

In the case of producing divided MAC frames, data contained in the "length/ type" field 604 and the payload field 605 are divided into segments of a fixed size, M bytes. The destination MAC address 602 and source MAC address 603 of the original MAC frame are added to the respective divided data as the destination MAC addresses 609-1 to 609-k and source MAC addresses 610-1 to 610-k.

In addition, the frame type identifiers 611-1 to 611-k are added to the divided frames, respectively, so that the frames can be recognized as divided frames. Further, the pointers 612-1 to 612-k each consisting of 2 bytes and indicating the position of the divided data in the original MAC frame are added to the respective divided frames. For example, when a value of 9000h indicating an unengaged type is added as the frame type identifier 611 (611-1 to 611-k) to each of the divided MAC frames, 9001h is inserted into the frame type identifier field 611-k of the last divided frame so that the frame can be recognized as the last frame.

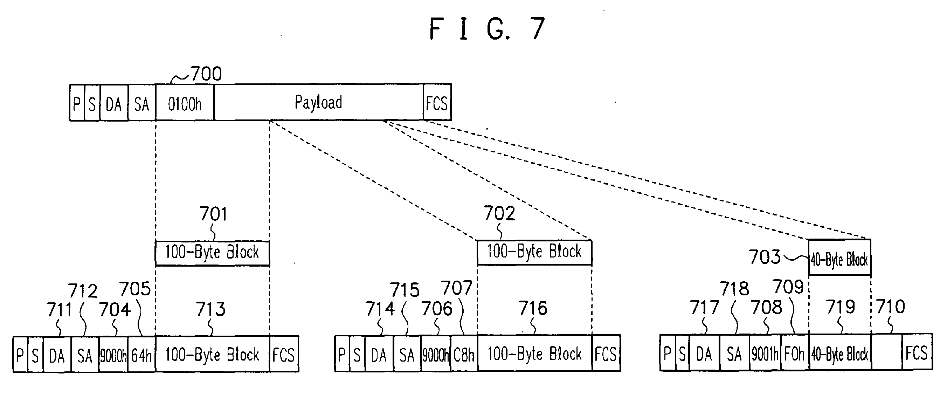

In the following, a concrete example of the method for forming divided MAC frames will be given. Referring to Fig. 7, a description will be made of the case of dividing a MAC frame of 256 bytes long, wherein N = 250 and M = 100. The MAC frame length indicates the length of fields between the destination MAC address 602 and the frame check sequence 606. Accordingly, the length of the "length/ type" field 604 and the payload field 605 can be found out as follows:

the length of the "length/ type" field and the payload field =

256- 6 (destination MAC address) - 6 (source MAC address) -

4 (frame check sequence) = 240

The 240-byte fields are divided into blocks of a fixed size, that is, blocks 701 and 702 each consisting of 100 bytes and a block 703 of 40 bytes. A value of 9000h is inserted into the frame type identifier field 704 of the first 100-byte block 701. Additionally, since the 100-byte block 701 has been located in the 1st to 100th-byte field of the original MAC frame, a value of 64h (100) is inserted into the pointer field 705. Similarly, a value of 9000h is inserted into the frame type identifier field 706 of the next 100-byte block 702. Since the 100-byte block 702 has been located in the 101st to 200th-byte field of the original MAC frame, a value of C8h (200) is inserted into the pointer field 707.

Besides, a value of 9001h is inserted into the frame type identifier field 708 of the last 40-byte block 703. Since the 40-byte block 703 has been located in the 201st to 240th-byte field of the original MAC frame, a value of F0h (240) is inserted into the pointer field 709. Further, the payload field 719 must be extended by adding a padding 710 of 5 bytes because the fields between the destination MAC address and the frame check sequence of the MAC frame should be 64 bytes long at a minimum.

Next, a description will be made of the case of reassembling the divided MAC frames. The frame length determining section 300 refers to the length/ type field of each divided frame to detect its type (Fig. 5, step 507). In this example, a value of 9000h has been added as the frame type identifier to the divided MAC frames. Consequently, MAC frames with a length/ type field value of 9000h or 9001h are reassembled.

On receipt of the first divided MAC frame, the length/ type field of the frame is checked. If the MAC frame is provided with a length/ type field value of 9000h, the frame can be recognized as a divided frame. After receiving a divided MAC frame, the reassemble management section 303 monitors and checks the receipt of MAC frames having the same source MAC address as that of the divided MAC frame.

More specifically, when receiving divided MAC frames having the same source MAC address, the reassemble management section 303 manages the location information of the respective divided frames based on their pointers using the reassemble management table 304 (step 510). Thereby, it is figured out which part of data in the original MAC frame has been received. Upon receipt of the last divided frame having a length/ type field value of 9001h, if it is confirmed that all the data bytes of the original MAC frame has been received with reference to the reassemble management table 304, the divided MAC frames are output to the switch section 205 (steps 513 and 520).

In the case where all the data bytes of the original MAC frame cannot be received due to frame disposal by the intermediate devices or it is determined by the timer 305 that a prescribed period of time has passed after an entry was made in the reassemble management table 304 (step 512, No), the divided MAC frames or bytes which have already been received are discarded and the entry in the reassemble management table 304 are deleted (step 514). Besides, if there is found a duplication of a received MAC frame (step 509, No), the duplicate frame is discarded (step 515).

As shown in Fig. 4, the reassemble management table 304 is composed of a search memory 402 including source MAC addresses 400 and information storage addresses 401, and a received data byte management memory 403. In the received data byte management memory 403, information on received data bytes with respect to each source MAC address 400 is stored in the address specified by each information storage address 401. The search memory 402 may be formed of, for example, a CAM (Content Addressable Memory) or an associative storage. The received data byte management memory 403 may be formed of an ordinary memory.

Upon receipt of a divided MAC frame, the reassemble management section 303 searches the search memory 402 using the source MAC address of the MAC frame as a key. When there is an entry corresponding to the source MAC address, the reassemble management section 303 updates information on received data bytes stored at the address in the received data byte management memory 403 specified by the information storage address 401 of the entry. When there is no entry corresponding to the source MAC address, the source MAC address is registered in the search memory 402 in combination with an information storage address. On receipt of the last divided MAC frame, it is confirmed that all the data bytes of the original MAC frame has been received with reference to the received data byte management memory 403. Thereafter, the contents of the search memory 402 and the received data byte management memory 403 with regard to the received MAC frames are deleted.

In the following, a description will be made of a method for forming an original MAC frame from divided MAC frames with reference to Fig. 7. Since each of the preamble and start- of- frame delimiter is a fixed pattern, it will not be described herein.

Upon receipt of the first divided MAC frame, the frame type identifier or the length/ type 704 and pointer 705 of the MAC frame are discarded while the destination MAC address 711, source MAC address 712 and 100-byte block 713 are stored. When the following divided MAC frame is received, the destination MAC address 714, source MAC address 715, length/ type 706 and pointer 707 of the MAC frame are discarded while the 100-byte block 716 is kept so as to be subsequent to the previously stored data. Similarly, when the last divided MAC frame is received, the destination MAC address 717, source MAC address 718, length/ type 708 and pointer 709 of the MAC frame are discarded while the 40-byte block 719 is kept so as to be subsequent to the previously stored data. On this occasion, since the padding 710 may have been added to the last divided MAC frame, only valid data must be selected according to pointer information.

In the above description, while parameters N and M are set to 250 and 100, respectively, they are given only as examples. M may be any integer number larger than or equal to 44, sufficient to satisfy the minimum MAC frame length. N may be any integer number greater than M. Besides, while 9000h and 9001h are used as the frame type identifiers, they are also cited merely by way of example and without limitation. Any values indicating an unengaged type may be used so long as the values identify divided MAC frames and the last divided MAC frame.

With respect to the interface sections of each edge device, Ethernet implementation of any transmission rate and any physical medium type may be employed. Although a full description has not been given of the operation of the intermediate device, any device capable of switching or transferring normal Ethernet frames can be used.

In order to carry out the operation shown in the flowchart of Fig. 5, the CPU may execute a program previously stored in a storage medium such as a ROM.

As set forth hereinabove, in accordance with the present invention, respective edge devices that form a wide area Ethernet network are provided with a function for producing divided MAC frames from a MAC frame that is N bytes long or longer than N bytes. Consequently, a maximum limit is provided on the length of MAC frames which are transmitted in the network. Consequently, it is possible to reduce delays in the network. In addition, the lengths of frames transmitted in the Ethernet network can be kept less than a fixed size. Therefore, in the case where there are frames to be output to the same port in an intermediate device in the Ethernet network, it is possible to reduce such state (delay) that one frame has to wait for output while the other long frame is being transmitted. Furthermore, jumbo frames can be transmitted even if the intermediate device does not support the jumbo frames.

While the present invention has been described with reference to the particular illustrative embodiment, it is not to be restricted by the embodiment but only by the appended claims. It is to be appreciated that those skilled in the art can change or modify the embodiment without departing from the scope and spirit of the present invention.

According to embodiments there are provided a data transfer method, a data communication system and a program for reducing data transfer delays in intermediate network devices in a wide area Ethernet network. A MAC (Media Access Control) frame having a length of longer than or equal to N bytes is divided into divided frames each having a length of M bytes (N > M) in edge devices which form a wide area Ethernet network. Thus, a maximum limit is provided on the length of MAC frames which are transmitted in the network. Consequently, it is possible to eliminate delays in the transmission of other MAC frames in the network. In the case of transmitting divided MAC frames from inside to outside the network, the divided MAC frames are reassembled into an original MAC frame.

**Claims**

1. A data transfer device which is placed between the outside and inside of an Ethernet network, comprising:

   a dividing section for receiving a data frame to be transferred to the inside of the Ethernet network, and dividing the frame into a plurality of divided frames each having a predetermined fixed-length when the data length of the frame is longer than or equal to a prescribed length; and
   a reassembling section for receiving data frames to be transferred to the outside of the Ethernet network, and reassembling the frames into an original data frame when the frames are the divided frames.

2. The data transfer device claimed in claim 1, wherein:

the dividing section adds a frame type identifier for identifying the divided frame and pointer information indicating the location of the divided frame in the original frame to each of the divided frames; and
the reassembling section reassembles the divided frames into the original data frame based on their frame type identifiers and pointer information.

**3.** The data transfer device claimed in claim 1, wherein:

the dividing section adds a destination address and a source address of the original frame to each of the divided frames.

**4.** The data transfer device claimed in claim 1, wherein:

the dividing section adds a frame type identifier for identifying the divided frame, pointer information indicating the location of the divided frame in the original frame, and a destination address and a source address of the original frame to each of the divided frames; and
the reassembling section reassembles the divided frames into the original data frame based on their frame type identifiers and pointer information.

**5.** The data transfer device claimed in claim 1, wherein:

the dividing section adds a destination address and a source address of the original frame to each of the divided frames;
the data frame is a Media Access Control frame; and
the destination address and the source address are Media Access Control addresses.

**6.** The data transfer device claimed in claim 1, wherein:

the dividing section adds a frame type identifier for identifying the divided frame, pointer information indicating the location of the divided frame in the original frame, and a destination address and a source address of the original frame to each of the divided frames;
the reassembling section reassembles the divided frames into the original data frame based on their frame type identifiers and pointer information;
the data frame is a Media Access Control frame; and
the destination address and the source address are Media Access Control addresses.

**7.** A data transfer method for a data transfer device which is placed between the outside and inside of an Ethernet network, comprising:

a dividing step for receiving a data frame to be transferred to the inside of the Ethernet network, and dividing the frame into a plurality of divided frames each having a predetermined fixed-length when the data length of the frame is longer than or equal to a prescribed length; and
a reassembling step for receiving data frames to be transferred to the outside of the Ethernet network, and reassembling the frames into an original data frame when the frames are the divided frames.

**8.** The data transfer method claimed in claim 7, wherein:

at the dividing step, a frame type identifier for identifying the divided frame and pointer information indicating the location of the divided frame in the original frame are added to each of the divided frames; and
at the reassembling step, the divided frames are reassembled into the original data frame based on their frame type identifiers and pointer information.

**9.** The data transfer method claimed in claim 7, wherein:

at the dividing step, a destination address and a source address of the original frame are added to each of the divided frames.

**10.** The data transfer method claimed in claim 7, wherein:

at the dividing step, a frame type identifier for identifying the divided frame, pointer information indicating the location of the divided frame in the original frame, and a destination address and a source address of the original frame are added to each of the divided frames; and

at the reassembling step, the divided frames are reassembled into the original data frame based on their frame type identifiers and pointer information.

11. The data transfer method claimed in claim 7, wherein:

at the dividing step, a destination address and a source address of the original frame are added to each of the divided frames;

the data frame is a Media Access Control frame; and

the destination address and the source address are Media Access Control addresses.

12. The data transfer method claimed in claim 7, wherein:

at the dividing step, a frame type identifier for identifying the divided frame, pointer information indicating the location of the divided frame in the original frame, and a destination address and a source address of the original frame are added to each of the divided frames;

at the reassembling step, the divided frames are reassembled into the original data frame based on their frame type identifiers and pointer information;

the data frame is a Media Access Control frame; and

the destination address and the source address are Media Access Control addresses.

13. A data communication system including the data transfer device claimed in one of claims 1 to 6.

14. A program for implementing a data transfer method for a data transfer device placed between the outside and inside of an Ethernet network, which makes a computer perform:

a dividing process for receiving a data frame to be transferred to the inside of the Ethernet network, and dividing the frame into a plurality of divided frames each having a predetermined fixed-length when the data length of the frame is longer than or equal to a prescribed length; and

a reassembling process for receiving data frames to be transferred to the outside of the Ethernet network, and reassembling the frames into an original data frame when the frames are the divided frames.

F I G. 1

# F I G. 2

# F I G. 3

300
301
302
303
304
305

# F I G. 4

400
401
403

| SOURCE ADDRESS | INFORMATION ADDRESS | RECEIVED DATA BYTES MANAGEMENT |
|---|---|---|
| xx-xx-xx-xx-xx-xx | 0 | |
| yy-yy-yy-yy-yy-yy | 1 | |
| zz-zz-zz-zz-zz-zz | 2 | |

402

F I G. 5

EP 1 489 782 A1

EP 1 489 782 A1

F I G. 7

EP 1 489 782 A1

**European Patent Office**

# EUROPEAN SEARCH REPORT

Application Number

EP 04 01 4251

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/196792 A1 (MCNEIL ROY ET AL) 26 December 2002 (2002-12-26) * figure 7 * * paragraph [0039] - paragraph [0041] * * paragraph [0027] * * paragraph [0060] - paragraph [0063] * * paragraph [0080] - paragraph [0084] * ----- | 1-14 | H04L12/46 |
| X | US 2001/037422 A1 (BOESCH THOMAS ET AL) 1 November 2001 (2001-11-01) * paragraph [0022]; figure 3 * * paragraph [0008] * * paragraph [0027] - paragraph [0028] * ----- | 1-14 | |
| X | GB 2 372 679 A (AT & T LAB CAMBRIDGE LTD) 28 August 2002 (2002-08-28) * figures 3,5 * * page 11, paragraph THIRD * * page 12, paragraph THIRD * * page 14, paragraph FOURTH * ----- | 1-14 | |
| X | WO 03/013102 A (REISS CHRISTOPHE ; SUN MICROSYSTEMS INC (US)) 13 February 2003 (2003-02-13) * page 19, line 9 - line 24 * ----- | 1-14 | TECHNICAL FIELDS SEARCHED (Int.Cl.7) H04L |
| X | EP 0 923 210 A (NEWBRIDGE NETWORKS CORP) 16 June 1999 (1999-06-16) * paragraph [0066] * ----- | 1 | |
| X | WO 01/24477 A (ERICSSON TELEFON AB L M) 5 April 2001 (2001-04-05) * page 6, line 17 - page 7, line 2 * ----- | 1 | |

The present search report has been drawn up for all claims

| Place of search | Date of completion of the search | Examiner |
|---|---|---|
| Munich | 7 October 2004 | Lefebvre, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

## ANNEX TO THE EUROPEAN SEARCH REPORT
## ON EUROPEAN PATENT APPLICATION NO.

EP 04 01 4251

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2004

| Patent document cited in search report | | Publication date | Patent family member(s) | | Publication date |
|---|---|---|---|---|---|
| US 2002196792 | A1 | 26-12-2002 | NONE | | |
| US 2001037422 | A1 | 01-11-2001 | AU | 3767301 A | 27-08-2001 |
| | | | AU | 4098601 A | 27-08-2001 |
| | | | EP | 1256197 A2 | 13-11-2002 |
| | | | EP | 1256207 A2 | 13-11-2002 |
| | | | WO | 0161898 A2 | 23-08-2001 |
| | | | WO | 0161939 A2 | 23-08-2001 |
| | | | US | 2001024455 A1 | 27-09-2001 |
| GB 2372679 | A | 28-08-2002 | WO | 02069603 A2 | 06-09-2002 |
| WO 03013102 | A | 13-02-2003 | WO | 03013102 A1 | 13-02-2003 |
| | | | EP | 1421758 A1 | 26-05-2004 |
| EP 0923210 | A | 16-06-1999 | EP | 0923210 A2 | 16-06-1999 |
| | | | AU | 687148 B2 | 19-02-1998 |
| | | | AU | 1411695 A | 08-08-1995 |
| | | | CA | 2181535 A1 | 27-07-1995 |
| | | | WO | 9520282 A1 | 27-07-1995 |
| | | | DE | 69511679 D1 | 30-09-1999 |
| | | | DE | 69511679 T2 | 06-04-2000 |
| | | | EP | 0740874 A1 | 06-11-1996 |
| | | | JP | 9507731 T | 05-08-1997 |
| | | | US | 6650646 B1 | 18-11-2003 |
| | | | US | 2004131064 A1 | 08-07-2004 |
| | | | US | 5818842 A | 06-10-1998 |
| WO 0124477 | A | 05-04-2001 | US | 2003198226 A1 | 23-10-2003 |
| | | | AU | 7819700 A | 30-04-2001 |
| | | | CN | 1377549 T | 30-10-2002 |
| | | | EP | 1216563 A2 | 26-06-2002 |
| | | | WO | 0124477 A2 | 05-04-2001 |

EPO FORM P0459

For more details about this annex : see Official Journal of the European Patent Office, No. 12/82